# EUROPÄISCHE PATENTANMELDUNG

(11) **EP 1 480 480 A1**
(43) Veröffentlichungstag der Anmeldung: **24.11.2004**
(21) Anmeldenummer: 03425329.4
(22) Anmeldetag: 21.05.2003
(51) Int. Cl.: H04Q 7/38

(54) **Verfahren und Vorrichtung zum Gruppenruf mit mehr als einem Sprachkanal**

(71) Anmelder: SIEMENS AKTIENGESELLSCHAFT, 80333 München (DE); Siemens Mobile Communications S.p.A., 20126 Milano (IT)
(72) Erfinder: Harrieder, Johann, 81373 München (DE); Kampschulte, Bernd, 81379 München (DE); Marx, Hans-Jürgen, 82319 Starnberg (DE); Prueser, Juergen, 36251 Bad Hersfeld (DE); Qian, Faqiang, 1210 Wien (AT); Schmitt, Peter, 36251 Ludwigsau (DE); Seither, Stefan, 80335 München (DE); Visconti, Giovanni, 20069 Vaprio d'Adda (IT)
(74) Vertreter: Giustini, Delio

(57) **Zusammenfassung**

Verfahren und Vorrichtung zum Übertragen von Sprachdaten in mindestens einer Gruppenruf-Verbindung in einem Kommunikationsnetz dadurch gekennzeichnet, dass von einem sprechenden Nutzer (MS A) der Gruppenruf-Verbindung zumindest in uplink-Richtung ein Sprachkanal benutzt wird und dass mindestens ein zuhörender Nutzer (MS B, MS C, MS D) der Gruppenruf-Verbindung nur einen downlink-Sprachkanal benutzt.

## Beschreibung

Die Erfindung betrifft ein Verfahren und eine Vorrichtung zum Übertragen von Sprachdaten in mindestens einer Gruppenruf-Verbindung in einem Kommunikationsnetz.

Die GSM Spezifikationen 03.68 (Digital cellular telecommunications system (Phase 2+) (GSM); Voice Group Call Service (VGCS); Stage 2), 03.69 (Digital cellular telecommunications system (Phase 2+) (GSM); Voice Broadcast Service (VBS); Stage 2) und die 3GPP Technischen Spezifikationen 43.068 (Digital cellular telecommunications system (Phase 2+) (GSM); Voice Group Call Service (VGCS); Stage 2) und 43.069 (Digital cellular telecommunications system (Phase 2+) (GSM); Voice Broadcast Service (VBS); Stage 2) spezifizieren Dienste und Lösungen für die Telekommunikation bei Bahnbetrieben (railway telekommunication). Für die Telekommunikation bei Bahnbetrieben sind die Dienste Gruppenruf (Voice Group Call) und Sprach-Funk (Voice Broadcast Call) besonders relevant. Diese beiden Dienste erlauben es, Sprachdaten in geschlossenen Gruppen mit einem sprechenden und einer Anzahl zuhörender Nutzer jeweils eines Kommunikationsendgerätes zu übertragen. Dabei können bis zu fünf Festnetzteilnehmer (Dispatcher) zur gleichen Zeit simultan sprechen. Die in den 3GPP Spezifikationen 43.068 und 43.069 vorgestellte Lösung eines Gruppenruf-Dienstes sieht vor, dass ein gemeinsamer Sprach-Gruppenkanal für sprechende und zuhörende Nutzer eins Kommunikationsendgerätes in einem Gruppenruf (Voice Group Call) oder einem Sprach-Rundruf (Voice Broadcast Call) verwendet wird. Ein Kommunikationsendgerät kann dabei ein Festnetzendgerät, ein Mobilfunkendgerät oder Ähnliches sein. Der sprechende und der zuhörende Nutzer eines Kommunikationsendgerätes benutzen den gemeinsamen Sprachgruppenkanal in downlink-Richtung. Zusätzlich nutzt der sprechende Nutzer eines Kommunikationsendgerätes den Sprachgruppenkanal in uplink-Richtung für die Übertragung der Sprachdaten. "In uplink-Richtung" bedeutet, dass die Sprachdaten von einem Kommunikationsendgerät MS A zu Netzeinheiten eines Kommunikationsnetzes gesendet werden und entsprechend bedeutet "in downlink-Richtung", dass die Sprachdaten von Netzeinheiten eines Kommunikationsnetzes zu mindestens einem Kommunikationsendgerät gesendet werden. Diese Lösung benötigt aufwendige Modifikationen der grundlegenden GSM-Funktionalitäten, wie z. B. des Handovers. Um einen Handover durchführen zu können muss in der Ziel-Vermittlungseinheit eine neue Vorgehensweise implementiert werden, welche den bereits verwendeten Pfad des zuhörenden Nutzers eines Kommunikationsendgerätes als Handover-Ziel verwendet. Auch für die Stummschaltung/Nicht-Stummschaltung von zuhörenden Nutzern eines Kommunikationsendgerätes benötigt diese Lösung komplizierte und Ressourcen verbrauchende Verfahren. Die Stummschaltung/Nicht-Stummschaltung könnte durchgeführt werden, indem DTMF-Signale am Anfang und am Ende der Sprachdatenübertragung übertragen werden. Basierend auf dieser Signalisierung würde dann eine Vermittlungseinheit eine Stummschalt-Kontroll-Information einem Kommunikationsendgerät übermitteln. DTMF steht für Dual-Tone-Multi-Frequency. Diese Signalisierung wird häufig als Nutzer-Dialog bei Schalteinheiten verwendet. Ein generiertes DTMF-Signal wird an eine Schalteinheit gesandt und abhängig von diesem Signal führt die Schalteinheit eine Funktion aus.

Die Aufgabe der vorliegenden Erfindung besteht darin, eine effiziente und kosteneffektive Lösung für die Übertragung von Sprachdaten in einer Gruppenruf-Verbindung vorzuschlagen.

Die Aufgabe wird erfindungsgemäß durch die Gegenstände der unabhängigen Patentansprüche gelöst. Weiterbildungen der Erfindung sind in den Unteransprüchen angegeben. Der sprechende Nutzer eines Kommunikationsendgerätes in einem Gruppenruf verwendet einen Sprachkanal zumindest in uplink-Richtung für die Übertragung von Sprachdaten von ihm zu einem Kommunikationsnetz. Dabei kann das Kommunikationsnetz ein Festnetz, ein mobiles Kommunikationsnetz, wie etwa ein GSM-Netz, UMTS-Netz oder Ähnliches sein. Mindestens ein zuhörender Nutzer eines Kommunikationsendgerätes empfängt die Sprachdaten über einen weiteren downlink-Sprachkanal. Der Vorteil dieser Erfindung besteht darin, dass das Kommunikationsendgerät des sprechenden Nutzers nicht stumm geschaltet werden muss, da kein Echo entstehen kann. Auch sind keine aufwendigen Modifikationen der Kommunikationsnetz-Funktionalitäten notwendig und es werden keine Netzressourcen übermäßig beansprucht.

Die Erfindung wird anhand eines in den Figuren dargestellten Ausführungsbeispiels näher erläutert. Im Einzelnen zeigen
- Figur 1: den Stand der Technik für die Übertragung von Sprachdaten in Gruppenrufen,
- Figur 2: eine vereinfachte Darstellung der erfindungsgemäßen Lösung für die Übertragung von Sprachdaten in Gruppenrufen,
- Figur 3: eine Vorrichtung für die Übertragung von Sprachdaten in Gruppenrufen.

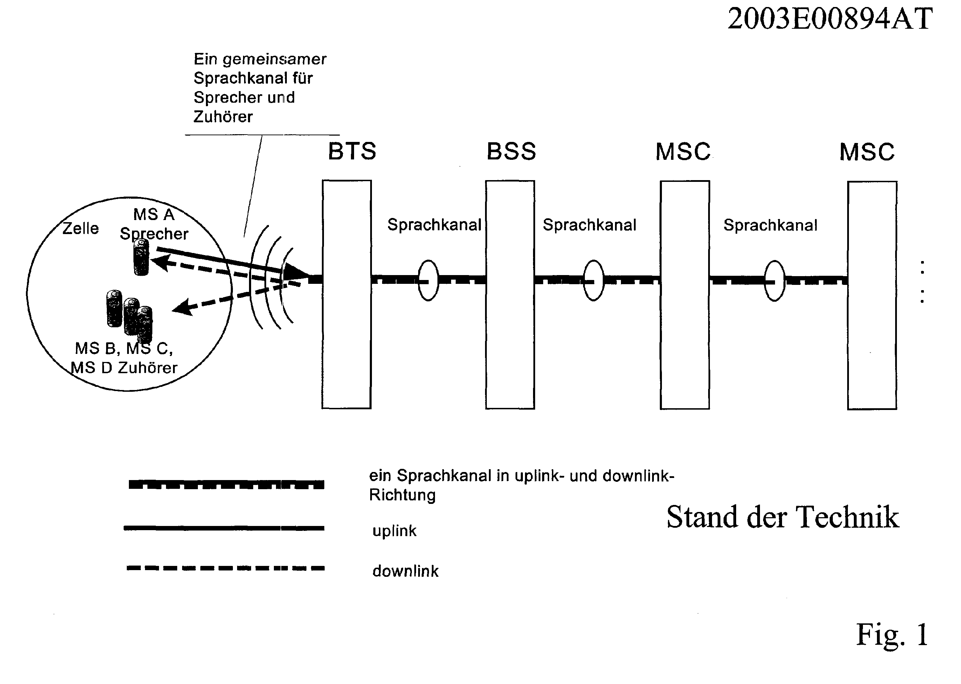

Figur 1 zeigt den Stand der Technik für die Übertragung von Sprachdaten in Gruppenrufen. Ein sprechender und mindestens ein zuhörender Nutzer mit jeweils einem Kommunikationsendgerät MS A, MS B, MS C, MS D benutzen einen gemeinsamen Gruppen-Sprachkanal. Sprachdaten eines sprechenden Nutzers eines Mobilfunkendgerätes MS A werden über eine oder mehrere Basisstationen BTS, Basisstationssubsysteme BSS und Vermittlungseinheiten MSC in uplink-Richtung eines gemeinsamen Sprachkanals an eine Ziel-Vermittlungseinheit MSC übermittelt. Die Ziel-Vermittlungseinheit MSC übermittelt die Sprachdaten über den gemeinsamen Sprachkanal in downlink-Richtung über eine oder mehrere Basis-Untersysteme BSS und Basisstationen BTS an mindestens einen zuhörenden Nutzer jeweils eines Mobilfunkendgerätes MS B, MS C, MS D. In diesem Ausführungsbeispiel befinden sich alle an der Gruppenruf-Verbindung beteiligten Nutzer eines Kommunikationsendgerätes MS A, MS B, MS C, MS D in der gleichen Zelle eines mobilen Kommunikationsnetzes. Die Beteiligten an einem Gruppenruf können sich auch in verschiedenen Zellen befinden.

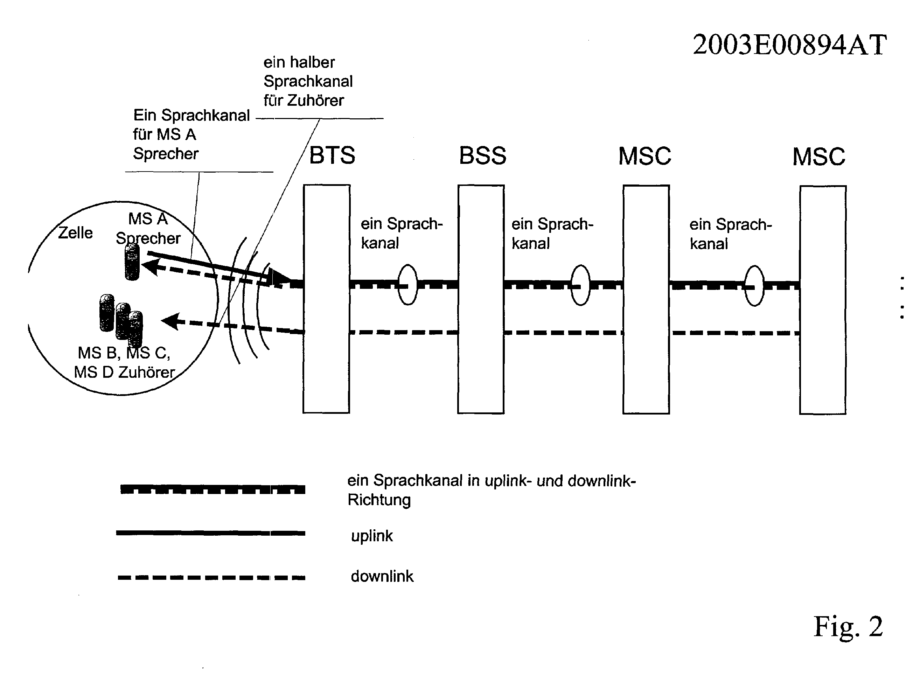

Figur 2 zeigt eine vereinfachte Darstellung der erfindungsgemäßen Lösung für die Übertragung von Sprachdaten in Gruppenrufen. Sprachdaten eines sprechenden Nutzers eines Mobilfunkendgerätes MS A werden über eine oder mehrere Basisstationen BTS, Basis-Untersysteme BSS und Vermittlungseinheiten MSC in uplink-Richtung eines Sprachkanals an eine Ziel-Vermittlungseinheit MSC übermittelt. Die Ziel-Vermittlungseinheit MSC leitet die Sprachdaten des sprechenden Nutzers eines Kommunikationsendgerätes über einen weiteren Sprachkanal in downlink-Richtung über ein oder mehrere Basis-Untersysteme BSS und Basisstationen BTS an mindestens einen zuhörenden Nutzer eines Mobilfunkendgerätes MS B, MS C, MS D weiter.

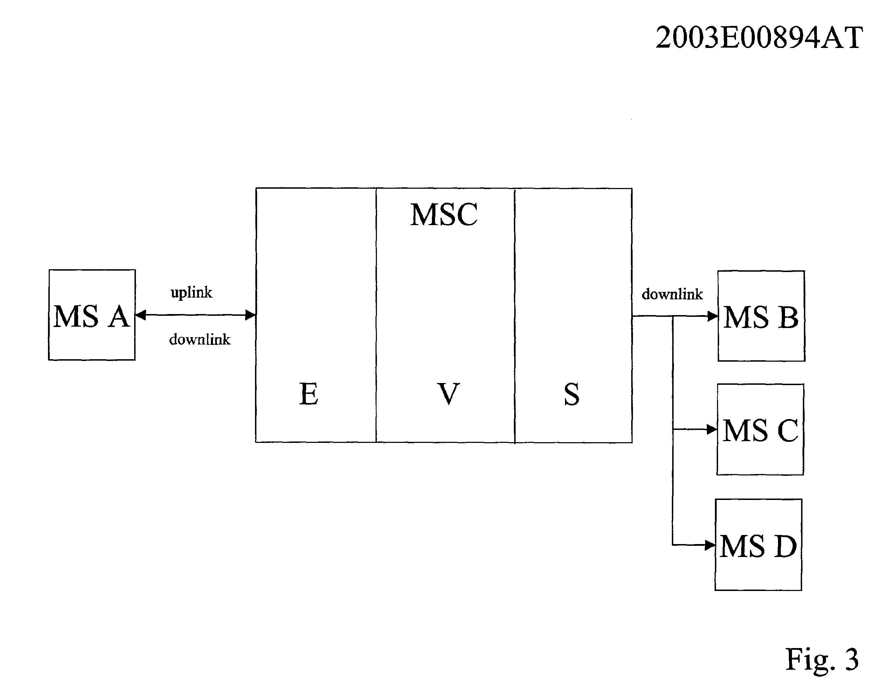

Figur 3 zeigt, wie eine Empfangseinheit E in einer Vermittlungseinheit MSC bei einem Gruppenruf von einem sprechenden Nutzer eines Kommunikationsendgerätes MS A Sprachdaten erhält. Die Sprachdaten werden an eine Verarbeitungseinheit V weitergeleitet. Die Verarbeitungseinheit V steuert, dass die Sprachdaten nicht in downlink-Richtung zum sprechenden Nutzer eines Kommunikationsendgerätes MS A übermittelt werden, damit kein Echo übertragen wird und steuert die Weiterleitung der Sprachdaten über eine Sendeeinheit S an zuhörende Nutzer eines Kommunikationsendgerätes MS B, MS C, MS D. Die Sprachdaten werden dann über eine Sendeeinheit S in einem weiteren Sprachkanal in downlink-Richtung an mindestens einen zuhörenden Nutzer jeweils eines Kommunikationsgerätes MS B, MS C, MS D übermittelt. Es ist auch möglich, dass zuhörenden Nutzern MS B, MS C, MS D des Gruppenrufs kein uplink-Sprachkanal zugewiesen wird, sondern nur ein downlink-Sprachkanal.

## Patentansprüche

1. Verfahren zum Übertragen von Sprachdaten in mindestens einer Gruppenruf-Verbindung in einem Kommunikationsnetz,
**dadurch gekennzeichnet,**
**dass** von einem sprechenden Nutzer (MS A) der Gruppenruf-Verbindung zumindest in uplink-Richtung ein Sprachkanal benutzt wird und
**dass** mindestens ein zuhörender Nutzer (MS B, MS C, MS D) der Gruppenruf-Verbindung nur einen downlink-Sprachkanal benutzt.

2. Verfahren nach Anspruch 1,
**dadurch gekennzeichnet,**
**dass** die zu übertragenden Sprachdaten eines sprechenden Nutzers (MS A) einer Gruppenruf-Verbindung in downlink-Richtung zum sprechenden Nutzer (MS A) einer Gruppenruf-Verbindung unterdrückt werden.

3. Verfahren nach Anspruch 2,
**dadurch gekennzeichnet,**
**dass** die Unterdrückung der Sprachdaten durch eine Vermittlungseinheit (MSC) geschieht.

4. Verfahren nach einem der vorhergehenden Ansprüche,
**dadurch gekennzeichnet,**
**dass** das Kommunikationsnetz ein mobiles Kommunikationsnetz ist.

5. Verfahren nach einem der vorhergehenden Ansprüche,
**dadurch gekennzeichnet,**
**dass** ein zuhörender Nutzer eines Kommunikationsendgerätes (MS B, MS C, MS D) keinen uplink-Sprachkanal benutzt, während er nur zuhört.

6. Verfahren nach einem der vorhergehenden Ansprüche,
**dadurch gekennzeichnet,**
**dass** einem zuhörenden Nutzer kein uplink-Sprachkanal zugewiesen wird.

7. Vorrichtung zum Übertragen von Sprachdaten in mindestens einer Gruppenruf-Verbindung in einem Kommunikationsnetz
- mit einer Empfangseinheit (E) zum Empfangen von Sprachdaten eines sprechenden Nutzers eines Kommunikationsendgerätes (MS A),
- mit einer Verarbeitungseinheit (V) zum Steuern der Weiterleitung an mindestens einen zuhörenden Nutzer eines Kommunikationsendgerätes (MS B, MS C, MS D) in downlink-Richtung und zum Unterdrücken der Weiterleitung der Sprachdaten an den sprechenden Nutzer eines Kommunikationsendgerätes (MS A) in downlink-Richtung
- mit einer Sendeeinheit (S) zum Senden der Sprachdaten an mindestens einen zuhörenden Nutzer eines Kommunikationsendgerätes (MS B, MS C, MS D).

8. Vorrichtung nach Anspruch 7,
**dadurch gekennzeichnet,**
**dass** das Kommunikationsnetz ein mobiles Kommunikationsnetz ist.

9. Vorrichtung nach einem der vorhergehenden Ansprüche,
**dadurch gekennzeichnet,**
**dass** zum Unterdrücken der Sprachdaten in downlink-Richtung zum sprechenden Nutzer einer Gruppenruf-Verbindung eine Vermittlungseinheit (MSC) vorgesehen ist.
